# EUROPEAN PATENT SPECIFICATION

(11) **EP 4 410 519 B1**
(45) Date of publication and mention of the grant of the patent: **04.02.2026**
(21) Application number: 22892431.2
(22) Date of filing: 22.09.2022
(51) Int. Cl.: B29C 64/245, B29C 64/124, B29C 64/232, B29C 64/255, B29C 64/393, B33Y 30/00, B33Y 50/02, B29C 64/35, B29C 64/364, B33Y 10/00

(54) **STEREOLITHOGRAPHY DEVICE AND METHOD FOR PRODUCING 3D PRINTED OBJECT**
STEREOLITHOGRAPHIEVORRICHTUNG UND VERFAHREN ZUR HERSTELLUNG EINES 3D-GEDRUCKTEN OBJEKTS
DISPOSITIF DE STÉRÉOLITHOGRAPHIE ET PROCÉDÉ DE PRODUCTION D'UN OBJET IMPRIMÉ EN 3D

(30) Priority: 15.11.2021 JP 2021185879; 15.11.2021 JP 2021185926; 15.11.2021 JP 2021185927; 15.11.2021 JP 2021185950
(43) Date of publication of application: 07.08.2024
(73) Proprietor: JVCKENWOOD Corporation, Yokohama-shi, Kanagawa 221-0022 (JP)
(72) Inventor: TAKADA, Hiroyuki, Yokohama-shi, Kanagawa 221-0022 (JP); NAKASAKO, Masaya, Yokohama-shi, Kanagawa 221-0022 (JP)
(74) Representative: Wimmer, Hubert
(86) International application number: PCT/JP2022/035428
(87) International publication number: WO 2023/084930

(56) References cited:
- EP-A1- 3 354 442
- EP-A1- 3 643 479
- JP-A- 2017 523 925
- JP-A- 2020 066 236
- US-A1- 2009 236 778
- US-A1- 2018 370 136

## Description

### Field

The present disclosure relates to a stereo lithography apparatus and a method of manufacturing a modeling object.

### Background

In general, there is a known stereo lithography technology for irradiating a liquid state photo-curable resin with light, such as ultraviolet light, and forming a three-dimensional modeling object that is made of a cured resin. JP 2020-62841 A discloses, as what is called a regulated liquid level method, a stereo lithography technology for shaping a target modeling object by laminating cured layers by irradiating, through a light transmission window that is provided on a bottom surface of a liquid tank that retains therein a photo-curable resin, toward a base that is disposed opposite the light transmission window, light that corresponds to a cross sectional surface (predetermined cross sectional surface) of the modeling object located at a predetermined height position by repeating a process of shaping a cured resin layer (cured layer) having the same shape as the predetermined cross sectional surface on a lower surface of the base, and a process of pulling up the base by an amount corresponding to a predetermined height with respect to the liquid tank.

Incidentally, with a conventional regulated liquid level method, the modeling object by laminating the cured layers is soaked in the photo-curable resin that is contained in the liquid tank. Accordingly, the irradiated light may possibly cure an excessive photo-curable resin, and thus, there is a room for improvement in shaping a modeling object with high accuracy.

Furthermore, US 2018/370136 A1 discloses a stereolithography apparatus comprising a cartridge device, wherein a three-dimensional object is generated by curing a photosensitive substance under the action of specific radiation, wherein the device includes a support unit, a radiation source, and a cartridge unit positioned on the support unit and removed therefrom.

Accordingly, one aspect of an embodiment of the present disclosure has been conceived in light of the circumstances described above and an object thereof is to provide a stereo lithography apparatus capable of shaping a modeling object with high accuracy and a method of manufacturing the modeling object.

In accordance with the present invention, a stereo lithography apparatus and a method of manufacturing a target modeling object as set forth in claims 1 and 11 is provided.

Preferred embodiments of the invention are claimed in the dependent claims.

According to the present embodiment, an advantage is provided in that it is possible to shape a modeling object with high accuracy.

### Brief Description of Drawings

FIG. 1 is a schematic diagram illustrating a basic configuration of a stereo lithography apparatus according to a first embodiment.
FIG. 2 is a diagram illustrating a procedure of a method of manufacturing a modeling object according to the first embodiment.
FIG. 3 is a diagram illustrating a procedure of the method of manufacturing the modeling object according to the first embodiment.
FIG. 4 is a diagram illustrating a procedure of the method of manufacturing the modeling object according to the first embodiment.
FIG. 5 is a diagram illustrating a procedure of the method of manufacturing the modeling object according to the first embodiment.
FIG. 6 is a diagram illustrating a procedure of the method of manufacturing the modeling object according to the first embodiment.
FIG. 7 is a diagram illustrating a procedure of the method of manufacturing the modeling object according to the first embodiment.
FIG. 8 is a schematic diagram illustrating a basic configuration of a stereo lithography apparatus according to a second embodiment.
FIG. 9 is a schematic diagram illustrating a basic configuration of a stereo lithography apparatus according to a third embodiment.
FIG. 10 is a diagram illustrating a procedure of a method of manufacturing a modeling object according to the third embodiment.
FIG. 11 is a diagram illustrating a procedure of the method of manufacturing the modeling object according to the third embodiment.
FIG. 12 is a diagram illustrating a procedure of the method of manufacturing the modeling object according to the third embodiment.
FIG. 13 is a diagram illustrating a procedure of the method of manufacturing the modeling object according to the third embodiment.
FIG. 14 is a diagram illustrating a procedure of the method of manufacturing the modeling object according to the third embodiment.
FIG. 15 is a schematic diagram illustrating a basic configuration of a stereo lithography apparatus according to a fourth embodiment.
FIG. 16 is a diagram illustrating an operation of a suction mechanism included in the stereo lithography apparatus according to the fourth embodiment.

### Description of Embodiments

Preferred embodiments of the present disclosure will be explained in detail with reference to accompanying drawings. Furthermore, the present disclosure is not limited to the embodiments described below, and, in addition, if a plurality of embodiments are present, components constituted by combining each of the embodiments may also be included. Moreover, in the embodiments described below, the same components are denoted by the same reference numerals and an overlapping description thereof will be omitted.

Furthermore, in the embodiments described below, unless otherwise specified, an uncured photo-curable resin that is in a liquid state is simply referred to as a photo-curable resin. Moreover, an optical modeling object that has been shaped by curing a liquid photo-curable resin is referred to as a three-dimensional modeling object or simply referred to as a modeling object. The three-dimensional modeling object is not limited to a finished produce obtained by laminating all of a plurality of cured layers to be shaped, but also includes an unfinished produce that is in an intermediate stage of laminating some cured layers.

### [First Embodiment]

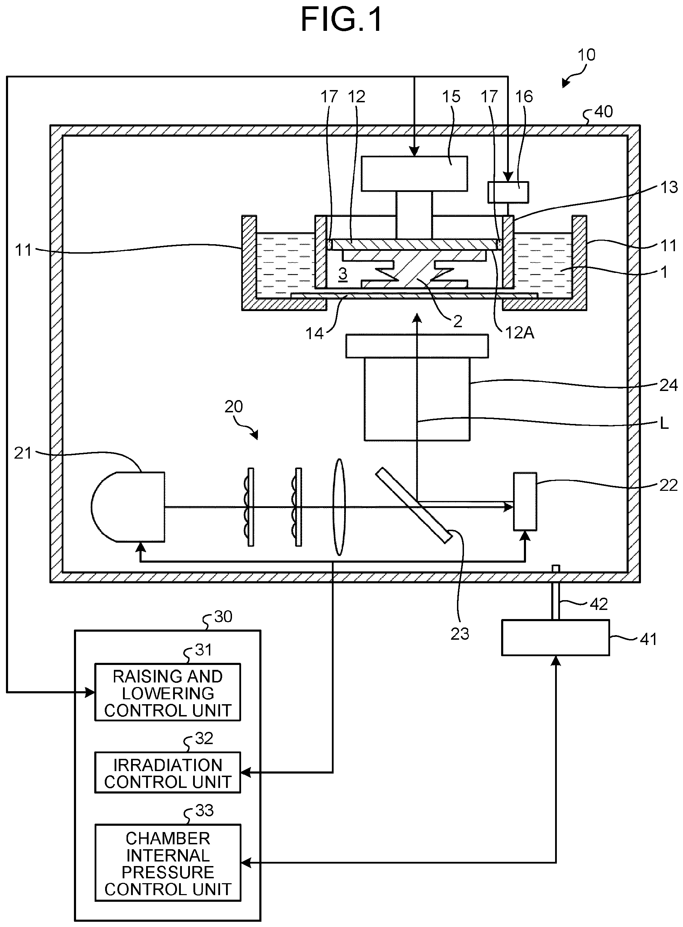

FIG. 1 is a schematic diagram illustrating a basic configuration of a stereo lithography apparatus according to a first embodiment. A stereo lithography apparatus 10 includes, as illustrated in FIG. 1, a modeling tank 11, a platform 12, a bulkhead 13, a light irradiation unit 20, and a control unit 30. Furthermore, in the present embodiment, the stereo lithography apparatus 10 includes a chamber 40 and a chamber internal pressure adjustment unit 41.

The modeling tank 11 is formed in a plate shape having an open upper surface, and is able to retain therein a photo-curable resin 1 that is in a liquid state. The modeling tank 11 includes a light transmission plate (light transmission portion) 14 on a bottom surface. The light transmission plate 14 transmits light for curing the photo-curable resin 1.

The photo-curable resin 1 is a raw material of a three-dimensional modeling object 2, and includes, for example, a polymerizable compound, such as an acrylic compound or a vinyl compound. Furthermore, it is preferable that the photo-curable resin 1 includes a polymerization initiator that produces radical species or the like caused by light irradiation.

The platform 12 holds the modeling object 2 made of the cured photo-curable resin 1, and is disposed opposite the light transmission plate 14 above the modeling tank 11. The platform 12 is formed in, for example, a polygonal plate shape, such as disc shape or a square plate shape, and is disposed such that a lower surface 12A of the platform 12 is substantially parallel to the light transmission plate 14. Furthermore, the platform 12 is connected to a platform raising and lowering mechanism 15, and is provided so as to be capable of being raised and lowered with respect to the modeling tank 11 caused by an operation of the platform raising and lowering mechanism 15. Specifically, the platform 12 is able to move closer to and away from the light transmission plate 14, and holds the modeling object 2 that has been shaped on the lower surface 12A that is located opposite the light transmission plate 14.

The bulkhead 13 are disposed on the outer side of the platform 12, and accommodates the platform 12 and the modeling object 2 in the inner side of the bulkhead 13. The bulkhead 13 is formed in a cylindrical shape (a polygonal cylindrical shape, such as a cylindrical shape or a square cylindrical shape) corresponding to the shape of the platform 12. Furthermore, the bulkhead 13 is connected to a bulkhead raising and lowering mechanism 16, and is provided so as to be capable of being raised and lowered with respect to the platform 12 caused by an operation of the bulkhead raising and lowering mechanism 16. In other words, the bulkhead 13 is able to relatively move up and down with respect to the platform 12.

Furthermore, an airtight member 17 that seals a portion between the platform 12 and the bulkhead 13 is disposed at an outer peripheral edge of the platform 12. The airtight member 17 is an O-ring that is formed by an elastic member, such as rubber. The airtight member 17 is urged to an inner surface of the bulkhead 13 by restoring force at the time of an elastic deformation, and seals a portion between the platform 12 and the bulkhead 13. By using the airtight member 17, airtightness between the platform 12 and the bulkhead 13 is ensured. Accordingly, when the platform 12 and the bulkhead 13 are lowered into the photo-curable resin 1, a space 3 (airtight space) partitioned by the platform 12, the bulkhead 13, and the photo-curable resin 1 is formed.

The light irradiation unit 20 is disposed below the modeling tank 11, that is, across the light transmission plate 14 from the platform 12 with. The light irradiation unit 20 irradiates the photo-curable resin 1 with light L for curing the photo-curable resin 1 through the light transmission plate 14. Any light may be used for the light L to be irradiated as long as the light is able to cure the photo-curable resin 1, and, for example, ultraviolet light or visible light at a short wavelength is used. The light irradiation unit 20 includes a light source 21, such as an ultraviolet ray lamp, an image forming element 22, a reflective mirror 23, a projection lens 24, and the like.

The light source 21 is one that emits light for irradiating the image forming element 22, and, for example, an ultraviolet ray lamp or the like is used. The image forming element 22 performs modulation in accordance with shape data on each of the layers of the modeling object 2 to be formed, and, for example, a liquid crystal on silicon (LCOS) device, digital mirror device (DMD), or a liquid crystal device may be used. The reflective mirror 23 reflects the light that has been modulated by the image forming element 22 toward the projection lens 24. The projection lens 24 that images light reflected by the reflective mirror 23. Moreover, the light irradiation unit 20 is not limited to this, and, for example, a laser scanning device that uses a laser light source and a drive of a mirror, or an optical device that uses a reflective optical system or a dioptric system may be used.

The chamber 40 is a container that accommodates at least the modeling tank 11, the platform 12, the bulkhead 13, the light irradiation unit 20, each of the raising and lowering mechanisms 15 and 16, and the like, and that hermetically seals an internal environment from the outside. The chamber internal pressure adjustment unit 41 adjusts an internal pressure of the chamber 40 by introducing gas (for example, air, nitrogen, etc.) into the interior of the chamber 40 by way of a pipe 42 or by discharging the gas to the outside of the chamber 40. By performing fine adjustment to the internal pressure of the chamber 40, it is possible to freely adjust a position of the lower surface of the space 3 described above.

The control unit 30 is an arithmetic processing device constituted by, for example, a central processing unit (CPU), or the like, is connected by each of the units included in the stereo lithography apparatus 10, and controls an operation of each of the units. The control unit 30 stores therein programs related to the method of manufacturing the modeling object 2, and executes a command included in the program by loading the program into a memory. In the control unit 30, an internal memory (not illustrated) is included, and the internal memory is used for temporarily stores therein data on the program or the like included in the control unit 30.

The control unit 30 includes a raising and lowering control unit 31, an irradiation control unit 32, and a chamber internal pressure control unit 33. The raising and lowering control unit 31 controls the height position of each of the platform 12 and the bulkhead 13 by controlling an operation of each of the platform raising and lowering mechanism 15 and the bulkhead raising and lowering mechanism 16. In other words, the raising and lowering control unit 31 is able to raise and lower the platform 12 and the bulkhead 13 in a linked manner with respect to the modeling tank 11 or is able to relatively raise and lower the platform 12 with respect to the bulkhead 13. As a result of the raising and lowering control unit 31 raising and lowering each of the platform 12 and the bulkhead 13, the raising and lowering control unit 31 forms a photo-curable resin layer having a predetermined thickness between the light transmission plate 14 and both the lower surface of the bulkhead 13 and the lower surface of the space 3.

The irradiation control unit 32 calculates an irradiation pattern of light that indicates a cross-sectional shape of the modeling object at an interval of a predetermined height on the basis of, for example, three-dimensional shape data, and irradiates the photo-curable resin with light by controlling the light source 21, the image forming element 22, and the like. As a result of this, the irradiation control unit 32 is able to form a cured layer having the predetermined thickness by irradiating the photo-curable resin layer located between the above described lower surface of the space 3 and the light transmission plate 14 with light corresponding to the cross-sectional shape of the modeling object at the predetermined height position. The chamber internal pressure control unit 33 monitors the position of, for example, the lower surface of the space 3 located on the inner side of the bulkhead 13 (a liquid surface of the photo-curable resin), and adjusts the internal pressure of the chamber 40 in accordance with the monitoring result. As a result of this, it is possible to align the position of the lower surface of the space 3 with the lower surface of the bulkhead 13, and it is thus possible to define the thickness of the photo-curable resin layer located between the lower surface of the space 3 and the light transmission plate 14 with high accuracy.

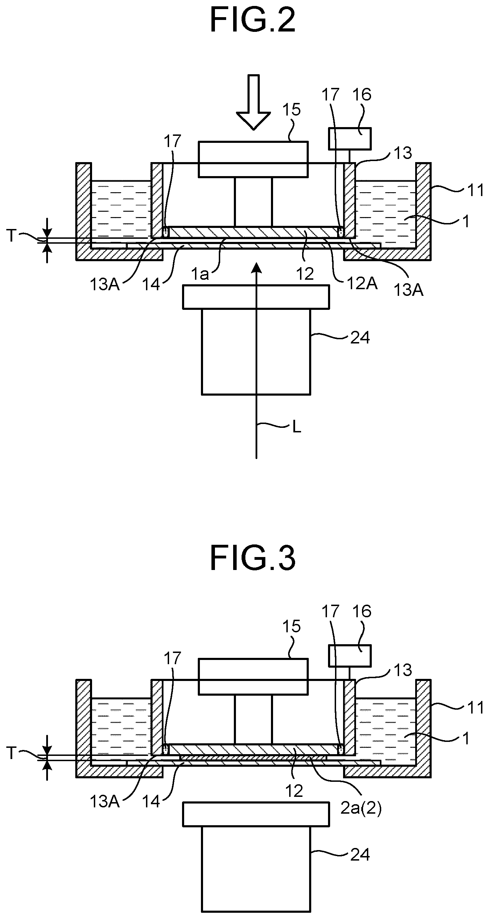

In the following, the method of manufacturing the modeling object according to the first embodiment will be described with reference to FIG. 2 to FIG. 7. FIG. 2 to FIG. 7 schematically illustrate a part of the stereo lithography apparatus 10 illustrated in FIG. 1. First, as illustrated in FIG. 2, the raising and lowering control unit 31 adjusts the height position of each of the platform 12 and the bulkhead 13 such that the lower surface 12A of the platform 12 and lower surface (bottom surface) 13A of the bulkhead 13 are flush with each other. Then, the raising and lowering control unit 31 lowers the platform 12 and the bulkhead 13 that are disposed higher than the modeling tank 11 that retains therein the photo-curable resin 1 to the interior of the modeling tank 11, and disposes the platform 12 and the bulkhead 13 at the position in which a portion between the lower surface 13A of the bulkhead 13 and the light transmission plate 14 becomes a predetermined distance T. Here, the predetermined distance T is set to a thickness corresponding to a single layer of the cured layer to be formed (for example, about several µm to 100 µm). In this case, between the platform 12 and the light transmission plate 14, a photo-curable resin layer 1a having the same predetermined thickness T as the predetermined distance T is formed.

Subsequently, the irradiation control unit 32 calculates the irradiation pattern that indicates the cross-sectional shape of the modeling object 2 at the predetermined height on the basis of the three-dimensional shape data on the modeling object 2 that is to be formed, and irradiates the photo-curable resin layer 1a with the light L corresponding to the cross-sectional shape of the first layer by way of the light transmission plate 14. As a result of this, the photo-curable resin layer 1a is cured in the same shape as the cross-sectional shape of the first layer. As a result of this, as illustrated in FIG. 3, a cured layer 2a having the predetermined thickness T serving as the first layer is held by the platform 12.

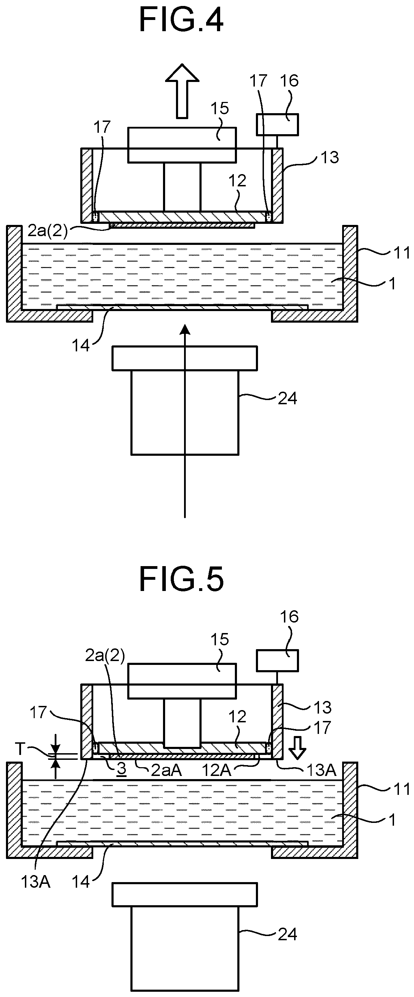

Subsequently, the raising and lowering control unit 31 raises, as illustrated in FIG. 4, the platform 12 and the bulkhead 13, and disposes the platform 12 and the bulkhead 13 at a position higher than that of the modeling tank 11. Then, the raising and lowering control unit 31 relatively lowers, as illustrated in FIG. 5, the bulkhead 13 by amount corresponding to the predetermined thickness T with respect to the platform 12. As a result of this, the lower surface 13A of the bulkhead 13 is flush with a lower surface 2aA of the cured layer 2a, and the space (airtight space) 3 that is partitioned by the platform 12 and the bulkhead 13 is formed around the cured layer 2a.

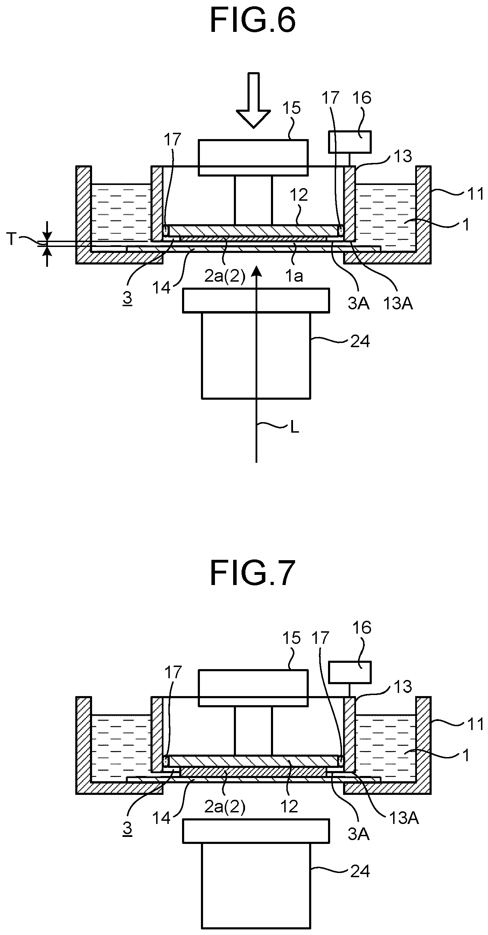

Subsequently, the raising and lowering control unit 31 vertically lowers the platform 12 and the bulkhead 13 into the interior of the modeling tank 11 until the portion between the lower surface 13A of the bulkhead 13 and the light transmission plate 14 becomes the predetermined distance T. In this case, the space 3 that is partitioned by the platform 12 and the bulkhead 13 becomes the airtight space, so that, as illustrated in FIG. 6, the photo-curable resin layer 1a having the uniform predetermined thickness T is formed between a lower surface 3A of the space 3 and the light transmission plate 14.

Here, the lower surface 3A of the space 3 coincides with the liquid surface of the photo-curable resin layer 1a, and the height position of the liquid surface of the photo-curable resin layer 1a may possibly vary in accordance with the depth of the photo-curable resin 1 or the area of the external surface of the photo-curable resin 1 in the region in which the photo-curable resin 1 is retained around the bulkhead 13. As a result of this, in the present embodiment, the height position of the liquid surface of the photo-curable resin layer 1a is appropriately adjusted by using the chamber internal pressure adjustment unit 41 illustrated in FIG. 1. The chamber internal pressure control unit 33 monitors, for example, the position of the liquid surface of the photo-curable resin layer 1a that is located in the inner side of the bulkhead 13, and adjusts, in accordance with the monitoring result, the internal pressure of the chamber 40 such that the photo-curable resin layer 1a becomes the predetermined thickness T. For example, the chamber internal pressure control unit 33 is able to lower the lower surface 3A of the above described space 3 by decreasing the chamber internal pressure from the initial state and reduce the thickness of the photo-curable resin layer 1a. By adjusting the internal pressure of the chamber 40 in this way, it is possible to align the position of the lower surface 3A of the space 3 with the lower surface 13A of the bulkhead 13, and it is thus possible to bring the photo-curable resin layer 1a into contact with only the lower surface 2aA of the cured layer 2a.

Then, as illustrated in FIG. 6, the irradiation control unit 32 irradiates the photo-curable resin layer 1a with the light L corresponding to the cross-sectional shape of the second layer by way of the light transmission plate 14. As a result of this, as illustrated in FIG. 7, the photo-curable resin layer 1a is cured in the same shape as the cross-sectional shape of the second layer, and then, the cured layer 2a is formed as a result of the second layer having the predetermined thickness T being laminated on the first layer and then the cured layer 2a. In this way, in the present embodiment, the photo-curable resin layer 1a having the predetermined thickness T is formed between the light transmission plate 14 and both the lower surface 13A of the bulkhead 13 and the lower surface 3A of the space 3, and the photo-curable resin layer 1a is cured in a predetermined shape, so that it is possible to shape the thickness of the cured layer 2a with high accuracy, and, furthermore, it is possible to shape the modeling object 2 with high accuracy. In addition, in the present embodiment, it is possible to provide the space 3 around the cured layer 2a that has been shaped in advance, so that it is possible to prevent a problem that the light L irradiated by way of the light transmission plate 14 cures the excessive photo-curable resin 1.

In this way, the raising and lowering control unit 31 and the irradiation control unit 32 are able to shape the modeling object 2 by alternately performing formation of the photo-curable resin layer 1a and formation of the cured layer 2a, and by laminating the cured layer 2a that is located at the n+1^{th} layer (n is a natural number) on the cured layer 2a that is located at the n^{th} layer.

As described above, the stereo lithography apparatus 10 according to the first embodiment includes the modeling tank 11 that retains the photo-curable resin 1 and that is provided with the light transmission plate 14 on the bottom surface of the modeling tank 11; the light irradiation unit 20 that irradiates the light L for curing the photo-curable resin 1 through the light transmission plate 14; the platform 12 that is disposed opposite the light transmission plate 14 and that is provided so as to be capable of being raised and lowered with respect to the modeling tank 11; the bulkhead 13 allowing the platform 12 to be raised and lowered, is formed in a cylindrical shape, is disposed on the outer side of the platform 12 by way of the airtight member 17, and forms the airtight space 3 in cooperation with the platform 12; the raising and lowering control unit 31 that raises and lowers each of the platform 12 and the bulkhead 13, and that forms the photo-curable resin layer 1a having the predetermined thickness T between the light transmission plate 14 and both the lower surface 13A of the bulkhead 13 and the lower surface 3A of the space 3; and the irradiation control unit 32 that forms the cured layer 2a by causing the light irradiation unit 20 to irradiate the photo-curable resin layer 1a with the light L corresponding to the cross-sectional shape of the target modeling object 2 at the predetermined height position.

With this configuration, the photo-curable resin layer 1a having the predetermined thickness T is formed between the light transmission plate 14 and both the lower surface 13A of the bulkhead 13 and the lower surface 3A of the space 3, and the photo-curable resin layer 1a is cured in the predetermined shape, so that it is possible to shape the thickness of the cured layer 2a with high accuracy, and, furthermore, it is possible to shape the modeling object 2 with high accuracy. In addition, with this configuration, it is possible to provide the space 3 around the cured layer 2a that has been shaped in advance, so that it is possible to prevent a problem that the light L irradiated by way of the light transmission plate 14 cures the excessive photo-curable resin 1, and it is possible to shape the modeling object 2 with high accuracy.

Furthermore, the raising and lowering control unit 31 relatively lowers the bulkhead 13 by an amount corresponding to the predetermined thickness T with respect to the platform 12 every time formation of the cured layer 2a has been completed, so that, in the case where the platform 12 and the bulkhead 13 are lowered to the interior of the modeling tank 11, it is always possible to form the photo-curable resin layer 1a having the predetermined thickness T between the light transmission plate 14 and both the lower surface 13A of the bulkhead 13 and the lower surface 3A of the space 3. Therefore, it is possible to shape the thickness of the cured layer 2a with high accuracy and, furthermore, it is possible to shape the modeling object 2 with high accuracy.

In addition, the raising and lowering control unit 31 temporarily raises the platform 12 and the bulkhead 13 up to a position above the photo-curable resin 1 every time formation of the cured layer 2a has been completed, so that gas is introduced into the inner side of each of the platform 12 and the bulkhead 13, and it is thus possible to form an airtight space. Therefore, it is possible to shape the thickness of the cured layer 2a with high accuracy, and, furthermore, it is possible to shape the modeling object 2 with high accuracy.

Furthermore, the raising and lowering control unit 31 and the irradiation control unit 32 alternately performing formation of the photo-curable resin layer 1a and formation of the cured layer 2a, and shapes the modeling object 2 by laminating the plurality of cured layers 2a on the platform 12, so that it is possible to shape the modeling object 2 with high accuracy

Furthermore, the stereo lithography apparatus 10 includes the chamber 40 that accommodates at least the modeling tank 11, the platform 12, the bulkhead 13, and the light irradiation unit 20; the chamber internal pressure adjustment unit 41 that adjusts the internal pressure of the chamber 40; and the chamber internal pressure control unit 33 that controls the chamber internal pressure adjustment unit 41, so that the stereo lithography apparatus 10 is able to align the position of the lower surface 3A of the space 3 with the lower surface 13A of the bulkhead 13 by adjusting the internal pressure of the chamber 40, and is able to accurately define the thickness of the photo-curable resin layer 1a to the predetermined thickness T. Therefore, it is possible to shape the thickness of the cured layer 2a with high accuracy, and, furthermore, it is possible to shape the modeling object 2 with high accuracy.

### [Second Embodiment]

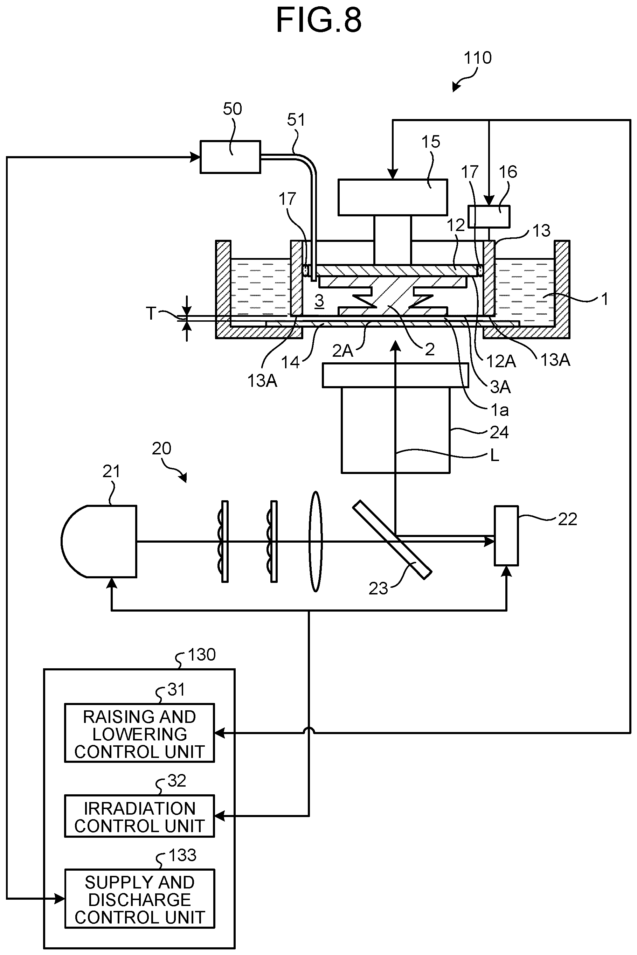

In the following, a stereo lithography apparatus according to a second embodiment will be described. FIG. 8 is a schematic diagram illustrating a basic configuration of the stereo lithography apparatus according to the second embodiment. The same reference numerals will be assigned to components having the same configurations as those of the above described embodiment, and therefore, descriptions thereof will be omitted.

Similarly to the stereo lithography apparatus according to the first embodiment, the space (airtight space) 3 that accommodates the modeling object 2 that is obtained by laminating the cured layers 2a in the modeling tank 11 in which the photo-curable resin 1 is retained is provided by the platform 12 and the bulkhead 13 in cooperation with each other, and the photo-curable resin layer 1a having the predetermined thickness T corresponding to a thickness of a single layer is formed between the lower surface 3A of the space 3 and the light transmission plate 14, it is possible to shape the modeling object 2 with high accuracy; however, for example, in the case where the position of the lower surface 13A of the bulkhead 13 that forms the space 3 is deviated from the height of a lower surface 2A of the cured modeling object 2, the cured modeling object 2 is not able to be brought into contact with the photo-curable resin layer 1a, and thus, a problem of poor modeling is conceivable.

Accordingly, in the second embodiment, a stereo lithography apparatus 110 includes, as illustrated in FIG. 8, the modeling tank 11, the platform 12, the bulkhead 13, the light irradiation unit 20, an air cylinder (supply and discharge unit) 50, and a control unit 130. Furthermore, the control unit 130 includes the raising and lowering control unit 31, the irradiation control unit 32, and a supply and discharge control unit 133.

The air cylinder 50 is communicated with the space 3 that is partitioned by the platform 12 and the bulkhead 13 by way of a hose 51. The air cylinder 50 includes a piston in the interior of, for example, a cylinder main body having a cylindrical shape. The supply and discharge control unit 133 monitors a position of the liquid surface of the photo-curable resin layer 1a located in the inner side of, for example, the bulkhead 13, and, introduces the gas contained in the cylinder to the space 3 or discharges the gas from the space 3 by changing, in accordance with the monitoring result, the position of the position in the axial direction. The supply and discharge control unit 133 performs an operation for allowing the liquid surface of the photo-curable resin layer 1a to be brought into contact with the lower surface 2A of the modeling object 2 by an operation of the air cylinder 50.

In the following, a method of manufacturing a modeling object according to the second embodiment will be described. Here, an operation of the air cylinder 50 will mainly be described. As described above, the raising and lowering control unit 31 and the irradiation control unit 32 shape the modeling object 2 by alternately performing formation of the photo-curable resin layer 1a and formation of the cured layer 2a, and laminating the cured layer 2a that is located at the n+1^{th} layer (n is a natural number) on the cured layer 2a that is located at the n^{th} layer.

Here, when the photo-curable resin layer 1a having the predetermined thickness T is formed between the light transmission plate 14 and both the lower surface 13A of the bulkhead 13 and the lower surface 3A of the space 3, as illustrated in FIG. 8, the supply and discharge control unit 133 operates the air cylinder 50. In other words, the supply and discharge control unit 133 monitors the position of the liquid surface of the photo-curable resin layer 1a by using a sensor or the like, discharges the gas contained in the space 3 by a predetermined amount by the air cylinder 50, slightly raises the liquid surface of the photo-curable resin layer 1a, and allows the lower surface 2A of the cured modeling object 2 to be brought into contact with the photo-curable resin layer 1a. Subsequently, the supply and discharge control unit 133 supplies a predetermined amount of gas to the space 3 by the air cylinder 50, and decreases the thickness of the photo-curable resin layer 1a to the predetermined thickness T. In this case, the photo-curable resin layer 1a maintains the contact state with the lower surface 2A of the modeling object 2 that has already been cured by surface tension.

Accordingly, even in the case where the cured layer 2a is newly shaped by operating the irradiation control unit 32 in this state, the cured layer 2a is laminated and constitutes the modeling object 2, so that it is possible to suppress poor modelling and shape the modeling object 2 with high accuracy.

In the above, the stereo lithography apparatus 110 according to the second embodiment includes the modeling tank 11 that retains the photo-curable resin 1 and that is provided with the light transmission plate 14 on the bottom surface of the modeling tank 11; the light irradiation unit 20 that irradiates the light L for curing the photo-curable resin 1 through the light transmission plate 14; the platform 12 that is disposed opposite the light transmission plate 14, that is provided so as to be capable of being raised and lowered with respect to the modeling tank 11, and that holds the modeling object 2 constituted by laminating the cured layers 2a obtained due to irradiation of the light L; the bulkhead 13 each of which allows the platform 12 to be raised and lowered, is formed in a cylindrical shape, is disposed on the outer side of the platform 12 by way of the airtight member 17, and forms the airtight space 3 in cooperation with the platform 12; the air cylinder 50 that supplies or discharges gas to or from the space 3; the raising and lowering control unit 31 that raises and lowers each of the platform 12 and the bulkhead 13, and that forms the photo-curable resin layer 1a having the predetermined thickness T between the light transmission plate 14 and both the lower surface 13A of the bulkhead 13 and the lower surface 3A of the space 3; the supply and discharge control unit 133 that allows the liquid surface of the photo-curable resin layer 1a to be brought into contact with the lower surface 2A of the modeling object 2 by operating the air cylinder 50; and the irradiation control unit 32 that forms the cured layer 2a by causing the light irradiation unit 20 to irradiate the photo-curable resin layer 1a with the light L corresponding to the cross-sectional shape of the predetermined height position of the target modeling object 2.

With this configuration, the photo-curable resin layer 1a having the predetermined thickness T is shaped between the light transmission plate 14 and both the lower surface 13A of the bulkhead 13 and the lower surface 3A of the space 3, and the photo-curable resin layer 1a is cured in the predetermined shape, so that it is possible to shape the thickness of the cured layer 2a with high accuracy, and, furthermore, it is possible to shape the modeling object 2 with high accuracy. Furthermore, with this configuration, it is possible to provide the space 3 around the cured layer 2a that has been shaped in advance, so that it is possible to prevent a problem that the light L irradiated by way of the light transmission plate 14 cures the excessive photo-curable resin 1, and it is possible to shape the modeling object 2 with high accuracy. Furthermore, with this configuration, the air cylinder 50 that sucks and discharges gas with respect to the space 3 that is partitioned by the platform 12 and the bulkhead 13 is provided, so that, by adjusting the height of the liquid surface of the photo-curable resin layer 1a, the contact state between the photo-curable resin layer 1a and the lower surface 2A of the modeling object 2 that has already been cured is maintained. Therefore, it is possible to shape the modeling object 2 with high accuracy by suppressing poor modelling.

Furthermore, the raising and lowering control unit 31, the supply and discharge control unit 133 and the irradiation control unit 32 repeatedly performs formation of the photo-curable resin layer 1a, contact between the liquid surface of the photo-curable resin layer 1a and the lower surface 2A of the modeling object 2, and formation of the cured layer 2a, so that it is possible to shape the modeling object 2 with high accuracy by suppressing poor modelling.

### [Third Embodiment]

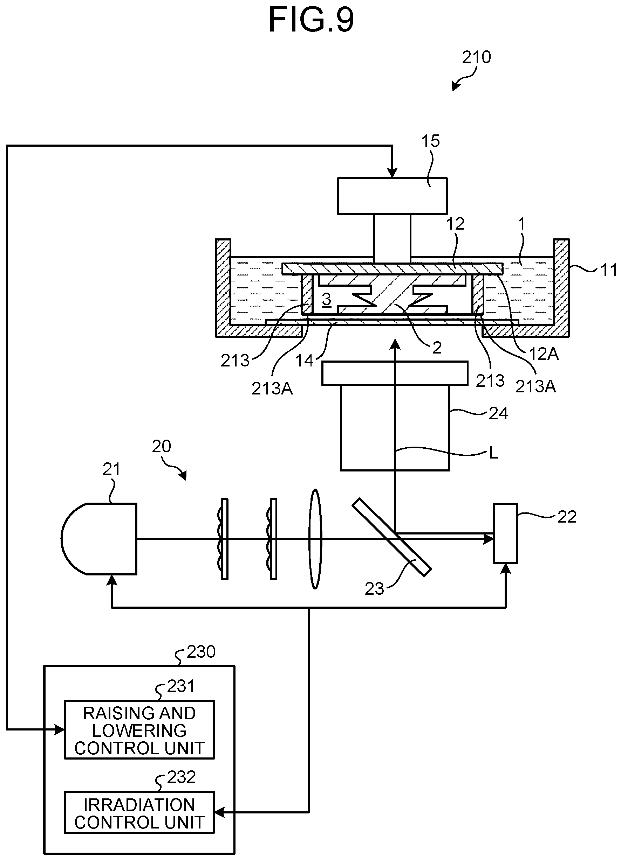

In the following, a stereo lithography apparatus according to a third embodiment will be described. FIG. 9 is a schematic diagram illustrating a basic configuration of the stereo lithography apparatus according to the third embodiment. The same reference numerals will be assigned to components having the same configurations as those of the above described embodiment, and therefore, descriptions thereof will be omitted.

In the above described stereo lithography apparatus according to the first and the second embodiments, the space (airtight space) 3 that accommodates the modeling object 2 that is obtained by laminating the cured layers 2a in the modeling tank 11 in which the photo-curable resin 1 is retained is provided by the platform 12 and the bulkhead 13 in cooperation with each other, and the photo-curable resin layer 1a having the predetermined thickness T corresponding to a thickness of a single layer is formed between the lower surface 3A of the space 3 and the light transmission plate 14. With this configuration, every time the cured layer 2a is shaped, there is a need to lower the bulkheads 13 with respect to the platform 12 by an amount corresponding to the predetermined thickness T. In this case, the predetermined thickness T is set to, for example, about several µm, and therefore, as a conceivable problem, an accurate raising and lowering mechanism is needed.

Accordingly, in the third embodiment, a stereo lithography apparatus 210 includes, as illustrated in FIG. 9, the modeling tank 11, the platform 12, the light irradiation unit 20, and a control unit 230. Furthermore, the control unit 230 includes a raising and lowering control unit 231 and an irradiation control unit 232.

In the third embodiment, instead of providing a bulkhead as a configuration of an apparatus, the stereo lithography apparatus 210 has a configuration in which a bulkhead 213 having a cylindrical shape is shaped, together with the modeling object 2, around the modeling object 2 that is provided on the platform 12. The platform 12 shapes the space (airtight space) 3 in cooperation with the shaped bulkheads 213.

Furthermore, the raising and lowering control unit 231 controls a height position of the platform 12 by controlling an operation of the platform raising and lowering mechanism 15. The raising and lowering control unit 231 shapes the photo-curable resin layer having the predetermined thickness between the light transmission plate 14 and both the bottom surface of the bulkhead 213 and the lower surface of the space 3 by raising and lowering the platform 12 on which the bulkhead 213 is shaped.

The irradiation control unit 232 calculates, on the basis of, for example, three-dimensional shape data, an irradiation pattern of light that indicates the cross-sectional shape of each of the modeling object 2 and the bulkhead 213 at an interval of a predetermined height, and irradiates the photo-curable resin with light by controlling the light source 21, the image forming element 22, and the like. The irradiation control unit 232 is able to shape a cured layer having a predetermined thickness by irradiating the photo-curable resin layer that is located between the lower surface of the above described space 3 and the light transmission plate 14 with light corresponding to each of the cross-sectional shapes of the modeling object 2 and the bulkhead 213 located at the predetermined height position.

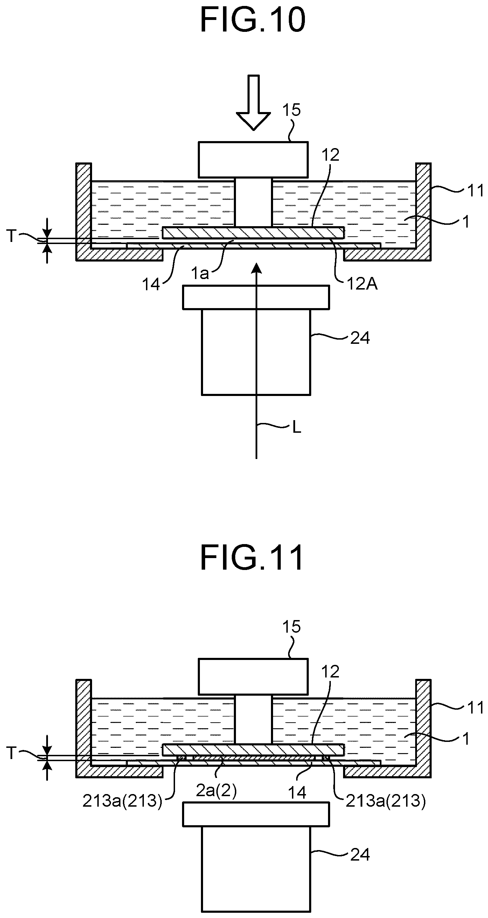

In the following, a method of manufacturing the modeling object according to the third embodiment will be described with reference to FIG. 10 to FIG. 14. FIG. 10 to FIG. 14 schematically illustrate a part of the stereo lithography apparatus 10 illustrated in FIG. 9. First, as illustrated in FIG. 10, the raising and lowering control unit 231 lowers the platform 12 that is disposed at the position higher than the modeling tank 11 in which the photo-curable resin 1 is retained to the interior of the modeling tank 11, and disposes the platform 12 such that a distance between the lower surface 12A of the platform 12 and the light transmission plate 14 becomes the predetermined distance T. In this case, the photo-curable resin layer 1a having the same predetermined thickness T as the predetermined distance T is formed between the platform 12 and the light transmission plate 14.

Subsequently, the irradiation control unit 232 calculates, on the basis of the modeling object 2 that is to be formed and on the basis of the three-dimensional shape data on the cylindrical shaped bulkhead 213 that is able to accommodate the modeling object 2, an irradiation pattern that indicates the cross-sectional shape of the modeling object 2 and the bulkhead 213 located at the predetermined height, and irradiates the photo-curable resin layer 1a with the light L corresponding to the cross-sectional shape of the first layer of each of the modeling object 2 and the bulkhead 213 through the light transmission plate 14. As a result of this, the photo-curable resin layer 1a is cured in the same shape as the cross-sectional shape of the first layer of each of the modeling object 2 and the bulkhead 213. As a result of this, as illustrated in FIG. 11, the modeling object 2 and the cured layers 2a and 213a each of which has the predetermined thickness T and corresponds to the first layer of the bulkhead 213 are held by the platform 12.

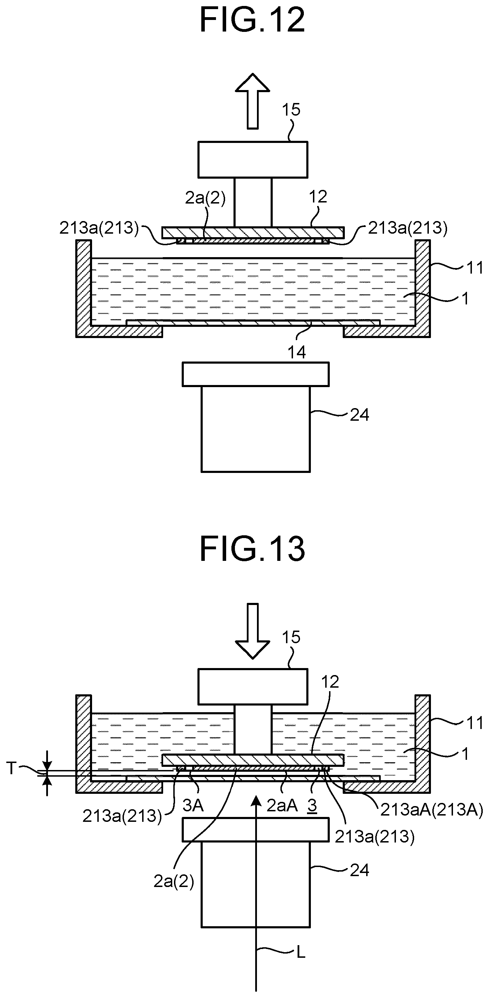

Subsequently, the raising and lowering control unit 231 raises, as illustrated in FIG. 12, the platform 12 and temporarily disposes the platform 12 at a position higher than that of the modeling tank 11. Here, each of the cured layer 2a of the modeling object 2 and the cured layers 213a of the bulkhead 213 is shaped to have the same height as the predetermined thickness T. As a result of this, the lower surface 2aA of the cured layer 2a of the modeling object 2 and a lower surfaces 213aA of the cured layers 213a of the bulkhead 213 are flush with each other, and the space (airtight space) 3 that is partitioned by the platform 12 and the bulkhead 213 (the cured layer 213a) is formed around the modeling object 2 (the cured layer 2a).

Subsequently, the raising and lowering control unit 231 vertically lowers the platform 12 to the interior of the modeling tank 11 until the distance between each of the lower surface 213A of the bulkhead 213 and the light transmission plate 14 becomes the predetermined distance T. In this case, the space 3 partitioned by the platform 12 and the bulkhead 213 becomes the airtight space, so that, as illustrated in FIG. 13, the photo-curable resin layer 1a having the uniform predetermined thickness T is formed between the lower surface 3A of the space 3 and the light transmission plate 14.

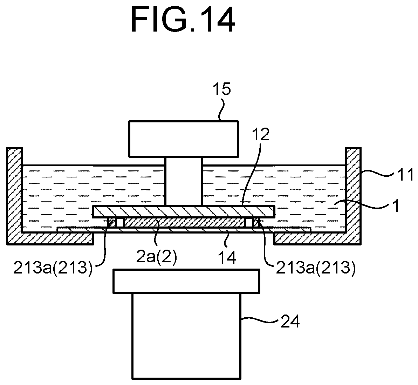

Then, the irradiation control unit 232 irradiates the photo-curable resin layer 1a with the light L corresponding to the cross-sectional shape of the second layer of the modeling object 2 and the bulkhead 213 through the light transmission plate 14. As a result of this, the photo-curable resin layer 1a is cured, as illustrated in FIG. 14, in the same shape as that of the cross-sectional shape of the second layer, and the cured layers 2a and 213a are shaped as a result of the second layer having the predetermined thickness T being laminated on the first layer. In this way, in the present embodiment, the photo-curable resin layer 1a that has the predetermined thickness T is formed between the light transmission plate 14 and both the lower surface 213aA of the bulkhead 213, which is molded together with the modeling object 2, and the lower surface 3A of the space 3, and the photo-curable resin layer 1a is cured in the predetermined shape. As a result of this, it is possible to shape the thickness of each of the cured layers 2a and 213a of the modeling object 2 and the bulkhead 213, respectively, with high accuracy, and, furthermore, it is possible to shape the modeling object 2 with high accuracy. Furthermore, in the present embodiment, it is possible to provide the space 3 around the cured layer 2a that has been shaped in advance, so that it is possible to prevent a problem that the light L irradiated by way of the light transmission plate 14 cures the excessive photo-curable resin 1. Furthermore, in the present embodiment, the bulkhead 213 is shaped together with the modeling object 2, so that there is no need to separately provide a bulkhead around the platform 12, and it is thus possible to simplify an apparatus configuration of the stereo lithography apparatus 210.

Furthermore, the raising and lowering control unit 231 and the irradiation control unit 232 are able to shape the modeling object 2 and the bulkhead 213 by alternately performing formation of the photo-curable resin layer 1a and formation of each of the cured layers 2a and 213a of the modeling object 2 and the bulkhead 213, respectively, and by laminating the cured layers 2a and 213a that are located at the n+1^{th} layer (n is a natural number) on the cured layers 2a and 213a, respectively, that are located at the n^{th} layer.

In the above, the stereo lithography apparatus 210 according to the third embodiment includes the modeling tank 11 that retains the photo-curable resin 1 and that is provided with the light transmission plate 14 on the bottom surface of the modeling tank 11; the light irradiation unit 20 that irradiates the light L for curing the photo-curable resin 1 through the light transmission plate 14; the platform 12 that is disposed opposite the light transmission plate 14, that is provided so as to be capable of being raised and lowered with respect to the modeling tank 11, that holds the bulkhead 213 which has a cylindrical shape and is shaped around the modeling object 2 together with the modeling object 2 as a result of irradiation of the light L, and that forms the airtight space 3 in cooperation with the bulkhead 213; the raising and lowering control unit 231 that raises and lowers the platform 12, and that forms the photo-curable resin layer 1a having the predetermined thickness T between the light transmission plate 14 and both the lower surface 213A of the bulkhead 213 and the lower surface 3A of the space 3; and the irradiation control unit 232 that forms each of the cured layers 2a and 213a by irradiating the photo-curable resin layer 1a with the light L corresponding to the cross-sectional shape of the predetermined height of each of the modeling object 2 and the bulkhead 213 by way of the light irradiation unit 20.

With this configuration, the photo-curable resin layer 1a having the predetermined thickness T is formed between the light transmission plate 14 and both the lower surface 213aA of the bulkhead 213, which is molded together with the modeling object 2, and the lower surface 3A of the space 3, and the photo-curable resin layer 1a is cured in the predetermined shape. As a result of this, it is possible to shape the thickness of each of the cured layers 2a and 213a of the modeling object 2 and the bulkhead 213, respectively, and, furthermore, it is possible to shape the modeling object 2 with high accuracy. Furthermore, in the present embodiment, it is possible to provide the space 3 around the cured layer 2a that has been shaped in advance, so that it is possible to prevent a problem that the light L irradiated through the light transmission plate 14 cures the excessive photo-curable resin 1. Furthermore, in the present embodiment, the bulkhead 213 is shaped together with the modeling object 2, so that there is no need to separately provide a bulkhead around the platform 12, and it is thus possible to simplify an apparatus configuration of the stereo lithography apparatus 210.

Furthermore, the raising and lowering control unit 231 temporarily raises the platform 12 up to a position above the photo-curable resin 1 every time formation of each of the cured layers 2a and 213a has been completed, so that gas is introduced into the inner side of the bulkhead 213 that is shaped on the platform 12, and it is thus possible to form an airtight space. Therefore, it is possible to shape the thickness of each of the cured layers 2a and 213a with high accuracy, and, furthermore, it is possible to shape the modeling object 2 with high accuracy.

Furthermore, the raising and lowering control unit 231 and the irradiation control unit 232 alternately performing formation of the photo-curable resin layer 1a and formation of the cured layers 2a and 213a, and shapes each of the modeling object 2 and the bulkhead 213 by laminating the plurality of respective cured layers 2a and 213a on the platform 12, it is possible to shape the modeling object 2 with high accuracy while simplifying an apparatus configuration of the stereo lithography apparatus 210.

Furthermore, the lower surface 2A of the modeling object 2 and the lower surface 213A of the bulkhead 213 are always in a flush state, it is possible to easily shape the modeling object 2 with high accuracy.

### [Fourth Embodiment]

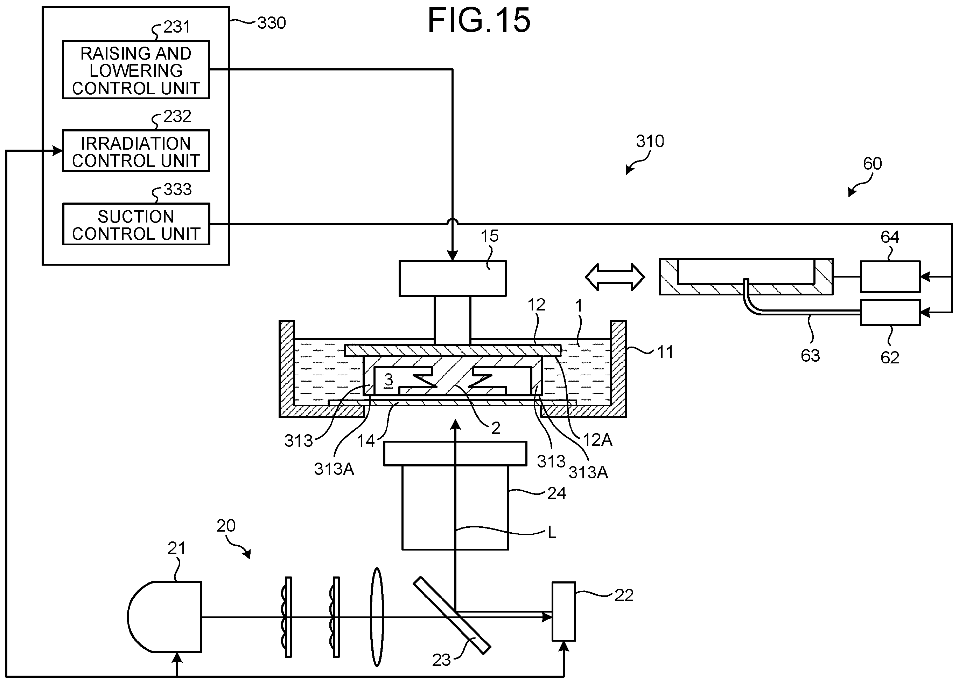

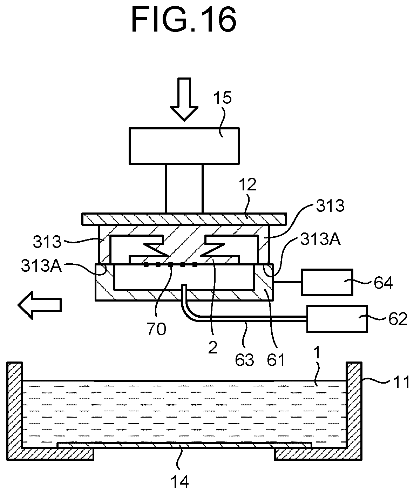

In the following, a stereo lithography apparatus according to a fourth embodiment will be described. FIG. 15 is a schematic diagram illustrating a basic configuration of the stereo lithography apparatus according to the fourth embodiment. FIG. 16 is a diagram illustrating an operation of a suction mechanism of the stereo lithography apparatus according to the fourth embodiment. The same reference numerals will be assigned to components having the same configurations as those of the above described embodiment, and therefore, descriptions thereof will be omitted.

Similarly to the above described stereo lithography apparatus according to the first and the second embodiment, the space (airtight space) 3 that accommodates the modeling object 2 that is obtained by laminating the cured layers 2a in the modeling tank 11 in which the photo-curable resin 1 is retained is provided on the platform 12 and the bulkhead 13 in cooperation with each other, and the photo-curable resin layer 1a having the predetermined thickness T corresponding to a thickness of a single layer is formed between the lower surface 3A of the space 3 and the light transmission plate 14, it is possible to shape the modeling object 2 with high accuracy; however, for example, if an uncured or semi-cured photo-curable resin remains in the modeling object 2 that has been cured in advance, when the subsequent cured layer is to be cured, there is a conceivable problem in that it is not possible to carry out modeling with high accuracy as a result of a remaining photo-curable resin itself that is in an uncured state being cured at the same time.

Accordingly, in the fourth embodiment, a stereo lithography apparatus 310 includes, as illustrated in FIG. 15, the modeling tank 11, the platform 12, the light irradiation unit 20, a suction mechanism 60, and a control unit 330. Furthermore, the control unit 330 includes the raising and lowering control unit 231, the irradiation control unit 232, and a suction control unit 333.

The suction mechanism 60 sucks and removes a photo-curable resin, such as an uncured photo-curable resin, adhered to the modeling object 2 by generating negative pressure. The suction mechanism 60 includes, as illustrated in FIG. 15, a plate portion 61 having an open upper surface, a suction unit 62 that is connected to the plate portion 61 via a hose 63 and that generates negative pressure in the interior of the plate portion 61, and a moving mechanism 64 that moves the plate portion 61 in, for example, a horizontal direction.

In the fourth embodiment, similarly to the third embodiment, the stereo lithography apparatus 310 has a configuration in which, instead of providing a bulkhead as an apparatus device configuration, bulkhead 313 having a cylindrical shape and being shaped together with the modeling object 2 around the modeling object 2 on the platform 12. The platform 12 forms the space (airtight space) 3 in cooperation with the shaped bulkhead 313. The bulkhead 313 is shaped in an integral manner with the modeling object 2. The procedure of shaping the modeling object 2 and the bulkhead 313 is the same as that described in the third embodiment. Furthermore, the bulkhead 313 is integrally constituted with the target modeling object 2, so that a process of separating the bulkhead 313 from the modeling object 2 is needed at the last step.

In contrast, the plate portion 61 included in the suction mechanism 60 is formed to have the same size as that of the above described bulkhead 313, and, as illustrated in FIG. 16, the suction mechanism 60 is disposed below the platform 12, and, when the platform 12 is lowered, the bulkhead 313 is sandwiched by the platform 12 and the plate portion 61. As described above, the bulkhead 313 is integrally shaped with the modeling object 2, so that the modeling object 2 is supported by the platform 12 and the plate portion 61 by way of the bulkhead 313. As a result of this, each of the bulkheads 313 also functions as a supporting member that supports the modeling object 2.

Furthermore, with this configuration, if the bulkhead 313 is sandwiched by the platform 12 and the plate portion 61, an edge portion of the plate portion 61 shapes an enclosed space by abutting against a lower surface (bottom surfaces) 313A of the bulkhead 313. As a result of this, when the suction unit 62 is operated, it is possible to allow the interior of the enclosed space to be negative pressure, and it is thus possible to easily suck an uncured photo-curable resin 70 adhered to the modeling object 2 and remove the uncured photo-curable resin 70.

In the above, the stereo lithography apparatus 310 according to the fourth embodiment includes the modeling tank 11 that retains the photo-curable resin 1 and that is provided with the light transmission plate 14 on the bottom surface of the modeling tank 11; the light irradiation unit 20 that irradiates the light L for curing the photo-curable resin 1 through the light transmission plate 14; the platform 12 that is disposed opposite the light transmission plate 14, that is provided so as to be capable of being raised and lowered with respect to the modeling tank 11, that holds the bulkhead 313 having a cylindrical shape and is shaped around the modeling object 2 together with the modeling object 2 as a result of irradiation of the light L, and that forms the airtight space 3 in cooperation with the bulkhead 313; the suction mechanism 60 that sucks and removes the uncured photo-curable resin 70 adhered to the modeling object 2; the raising and lowering control unit 231 that raises and lowers the platform 12, and that forms the photo-curable resin layer 1a having the predetermined thickness T between the light transmission plate 14 and both the bottom surface 313A of the bulkhead 313 and the lower surface 3A of the space 3; the irradiation control unit 232 that forms an integral cured layer by irradiating the photo-curable resin layer 1a, from the light irradiation unit 20, with the light L corresponding to the cross-sectional shape of the predetermined height of the modeling object 2 and the bulkhead 313; and the suction control unit 333 that is disposed below the platform 12 and the operates the suction mechanism 60 when the platform 12 is located above the photo-curable resin 1.

With this configuration, the photo-curable resin layer 1a having the predetermined thickness T is formed between the light transmission plate 14 and both the lower surface 313A of the bulkhead 313 and the lower surface 3A of the space 3, and the photo-curable resin layer 1a is cured in the predetermined shape, so that it is possible to shape the thickness of the cured layer of each of the modeling object 2 and the bulkhead 313 with high accuracy, and, furthermore, it is possible to shape the modeling object 2 with high accuracy. Furthermore, with this configuration, it is possible to provide the space 3 around the cured layer of the modeling object 2, so that it is possible to prevent a problem that the light L irradiated through the light transmission plate 14 cures the excessive photo-curable resin 1, and it is thus possible to shape the modeling object 2 with high accuracy. In addition, when the platform 12 is located above the photo-curable resin 1, the suction mechanism 60 that is disposed below the platform 12 that sucks and removes the uncured photo-curable resin 70 adhered to the modeling object 2 is operated, it is possible to prevent the uncured photo-curable resin 70 adhered to the modeling object 2 from being additionally cured, and it is thus possible to shape the modeling object 2 with high accuracy.

The bulkhead 313 is integrally shaped with the modeling object 2, is sandwiched by the plate portion 61 included in the suction mechanism 60 and the platform 12 during the operation of the suction mechanism 60, and functions as the supporting member that supports the modeling object 2. As a result of this, it is possible to easily prevent the modeling object 2 from being separated from the platform 12 at least during a suction operation.

The suction mechanism 60 includes the plate portion 61 having an open upper surface, and the plate portion 61 forms an enclosed space by abutting against the lower surface 313A of the bulkhead 313, so that, when the suction unit 62 is operated, it is possible to allow the interior of the enclosed space to be negative pressure, and it is thus possible to easily suck the uncured photo-curable resin 70 adhered to the modeling object 2 and remove the uncured photo-curable resin 70.

Furthermore, the raising and lowering control unit 231, the irradiation control unit 232, and a suction control unit 333 repeatedly performs formation of the photo-curable resin layer 1a, formation of the cured layer, and suction of the uncured photo-curable resin 70, laminates the plurality of cured layers on the platform 12, and shapes the modeling object 2 and the bulkhead 313, so that it is possible to shape the modeling object 2 with high accuracy while simplifying the apparatus configuration of the stereo lithography apparatus 310.

In the above, the stereo lithography apparatus and the method of manufacturing the modeling object according to the present invention has been described, but the present invention may also be implemented with various kinds of embodiments other than the embodiments described above. Furthermore, the configurations described in the above embodiments may be used in any appropriate combination. For example, the chamber 40, the chamber internal pressure adjustment unit 41, and the chamber internal pressure control unit 3 described in the first embodiment may be used in combination with the stereo lithography apparatus according to the second embodiment and the fourth embodiment, or the air cylinder 50 and the supply and discharge control unit 133 according to the second embodiment may be used in combination with the stereo lithography apparatus according to the first embodiment, the third embodiment, and the fourth embodiment. Furthermore, the suction mechanism 60 and the suction control unit 333 according to the fourth embodiment may be used in combination with the stereo lithography apparatus according to the first embodiment to the third embodiment.

Each of the components included in the stereo lithography apparatus illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

The configuration of the control unit included in the stereo lithography apparatus is implemented as, for example, software, programs, or the like loaded in a memory. In the embodiments described above, the description has been given as the functional blocks that are implemented in cooperation with these pieces of hardware or software. In other words, the functional blocks can be implemented in various forms by using only hardware, using only software, or using a combination of hardware and software.

### Industrial Applicability

The stereo lithography apparatus and the stereo lithography method according to the present embodiment are applicable to, for example, a stereo lithography technology for irradiating a photo-curable resin that is in a liquid state with light, such as ultraviolet light, and forming a three-dimensional modeling object that is made of cured resin.

### Reference Signs List

1 photo-curable resin
1a photo-curable resin layer
2 three-dimensional modeling object (modeling object)
2a cured layer
3 space (airtight space)
3A lower surface
10, 110, 210, 310 stereo lithography apparatus
11 modeling tank
12 platform
13, 213, 313 bulkhead
13A, 213A, 313A lower surface (bottom surface)
14 light transmission plate (light transmission portion)
15 platform raising and lowering mechanism
16 bulkhead raising and lowering mechanism
17 airtight member
20 light irradiation unit
21 light source
22 image forming element
23 reflective mirror
24 projection lens
30, 130, 230, 330 control unit
31, 231 raising and lowering control unit
32, 232 irradiation control unit
33 chamber internal pressure control unit
40 chamber
41 chamber internal pressure adjustment unit
50 air cylinder (supply and discharge unit)
60 suction mechanism
61 plate portion
62 suction unit
63 hose
64 moving mechanism
70 uncured photo-curable resin
133 supply and discharge control unit
333 suction control unit

## Claims

1. A stereo lithography apparatus (10) comprising:
a modeling tank (11) that retains a photo-curable resin (1), and in which a light transmission portion (14) is provided on a bottom surface of the modeling tank (11);
a light irradiation unit (20) that irradiates light (L) for curing the photo-curable resin (1) through the light transmission portion (14);
a platform (12) that is disposed opposite the light transmission portion (14) and that is provided so as to be capable of being raised and lowered with respect to the modeling tank (11);
a bulkhead (13) formed in a cylindrical shape and forming an airtight space in cooperation with the platform (12);
a raising and lowering control unit (31) configured to control a height position of each of the platform and the bulkhead (13), and configured to form a photo-curable resin layer having a predetermined thickness between the light transmission portion (14) and both a bottom surface of the bulkhead (13) and a lower surface of the airtight space (3); and
an irradiation control unit (32) configured to form a cured layer by causing the light irradiation unit to irradiate the photo-curable resin layer with the light (L) corresponding to a cross-sectional shape of a target modeling object (2) at a predetermined height position.

2. The stereo lithography apparatus (10) according to claim 1, wherein the bulkhead (13) allows the platform (12) to be raised and lowered, and is disposed on an outer side of the platform (12) by way of an airtight member (17).

3. The stereo lithography apparatus (10) according to claim 1 or 2, wherein the raising and lowering control unit (31) is configured to control the height position such that the bulkhead (13) is relatively lowered by an amount corresponding to the predetermined thickness with respect to the platform (12) every time formation of the cured layer has been completed.

4. The stereo lithography apparatus (10) according to claim 3, wherein the raising and lowering control unit (31) is configured to control the height position such that it temporarily raises the platform (12) and the bulkhead (13) up to a position above the photo-curable resin (1).

5. The stereo lithography apparatus (110) according to claim 2, further comprising:
a supply and discharge unit (50) configured to supply or discharge gas to or from the airtight space (3); and
a supply and discharge control unit (133) configured to bring a liquid surface of the photo-curable resin layer into contact with a lower surface (2A) of the modeling object (2) by operating the supply and discharge unit (50).

6. The stereo lithography apparatus (110) according to claim 5, wherein the raising and lowering control unit (31), the supply and discharge control unit (133), and the irradiation control unit (32) are configured to repeatedly perform formation of the photo-curable resin layer, contact between the liquid surface of the photo-curable resin layer and the lower surface (2A) of the modeling object (2), and formation of the cured layer.

7. The stereo lithography apparatus (210) according to claim 1, wherein the platform (12) holds the cylindrical shaped bulkhead (213) being formed around the modeling object (2) together with the modeling object (2) by irradiating the light (L).

8. The stereo lithography apparatus (210) according to claim 7, wherein a lower surface (2A) of the modeling object (2) and a lower surface of the bulkhead (213) are always in a flush state.

9. The stereo lithography apparatus (310) according to claim 7 or 8, further comprising:
a suction mechanism (60) configured to suck and remove an uncured photo-curable resin included in the photo-curable resin (1) adhered to the modeling object (2); and
a suction control unit (333) configured to operate the suction mechanism (60) by disposing the suction mechanism (60) below the platform (12) when the platform (12) is disposed above the photo-curable resin (1).

10. The stereo lithography apparatus (310) according to claim 9, wherein the raising and lowering control unit (231), the irradiation control unit (232), and the suction control unit (333) are configured to repeatedly perform formation of the photo-curable resin layer, formation of the cured layer, suction of the uncured photo-curable resin, and to shape the modeling object (2) and the bulkhead (313) by laminating the plurality of cured layers on the platform (12).

11. A method of manufacturing a target modeling object performed by using a stereo lithography apparatus (10) that includes:
a modeling tank (11) that retains a photo-curable resin (1), and in which a light transmission portion (14) is provided on a bottom surface of the modeling tank (11),
a light irradiation unit (20) that irradiates light (L) for curing the photo-curable resin (1) through the light transmission portion (14),
a platform (12) that is disposed opposite the light transmission portion (14) and that is provided so as to be capable of being raised and lowered with respect to the modeling tank (11), and
a bulkhead (13) allowing the platform (12) to be raised and lowered, being formed in a cylindrical shape, being disposed on an outer side of the platform (12) by way of an airtight member, and forming an airtight space (3) in cooperation with the platform (12); the method of manufacturing the target modeling object (2) comprising:
a step of forming a photo-curable resin layer having a predetermined thickness between the light transmission portion and both a bottom surface of the bulkhead (13) and a lower surface of the airtight space (3) by raising and lowering each of the platform (12) and the bulkhead (13);
a step of forming a cured layer by irradiating the photo-curable resin layer from the light irradiation unit (20) with the light (L) corresponding to a cross-sectional shape of the target modeling object (2) at a predetermined height position; and
a step of relatively lowering the bulkhead (13) by an amount corresponding to the predetermined thickness with respect to the platform (12).

## Patentansprüche

1. Eine Stereolithografievorrichtung (10), die Folgendes aufweist:
einen Modelliertank (11), der ein lichthärtbares Harz (1) enthält und in dem ein lichtdurchlässiger Abschnitt (14) an einer Bodenfläche des Modelliertanks (11) vorgesehen ist;
eine Lichtbestrahlungseinheit (20), die Licht (L) zum Aushärten des lichthärtbaren Harzes (1) durch den lichtdurchlässigen Abschnitt (14) hindurch bestrahlt;
eine Plattform (12), die gegenüber dem lichtdurchlässigen Abschnitt (14) angeordnet ist und so vorgesehen ist, dass sie in Bezug auf den Modellierungstank (11) angehoben und abgesenkt werden kann;
eine Trennwand (13), die zylindrisch geformt ist und in Zusammenarbeit mit der Plattform (12) einen luftdichten Raum bildet;
eine Anhebe- und Absenksteuereinheit (31), die so konfiguriert ist, dass sie eine Höhenposition der Plattform und der Trennwand (13) steuert und die so konfiguriert ist, dass sie eine lichthärtbare Harzschicht mit einer vorbestimmten Dicke zwischen dem lichtdurchlässigen Abschnitt (14) und sowohl einer Unterseite der Trennwand (13) als auch einer Unterseite des luftdichten Raums (3) bildet; und
eine Bestrahlungssteuereinheit (32), die so konfiguriert ist, dass sie eine ausgehärtete Schicht bildet, indem sie die Lichtbestrahlungseinheit veranlasst, die lichthärtbare Harzschicht mit dem Licht (L) entsprechend einer Querschnittsform eines Zielmodellierungsobjekts (2) in einer vorbestimmten Höhenposition zu bestrahlen.

2. Die Stereolithografievorrichtung (10) nach Anspruch 1, wobei die Trennwand (13) ein Anheben und Absenken der Plattform (12) ermöglicht und mittels eines luftdichten Elements (17) an einer Außenseite der Plattform (12) angeordnet ist.

3. Die Stereolithografievorrichtung (10) nach Anspruch 1 oder 2, wobei die Anhebe- und Absenksteuereinheit (31) so konfiguriert ist, dass sie die Höhenposition so steuert, dass die Trennwand (13) jedes Mal, wenn die Bildung einer ausgehärteten Schicht abgeschlossen ist, um einen Betrag relativ zur Plattform (12) abgesenkt wird, der der vorbestimmten Dicke entspricht.

4. Die Stereolithografievorrichtung (10) nach Anspruch 3, wobei die Anhebe- und Absenksteuereinheit (31) so konfiguriert ist, dass sie die Höhenposition so steuert, dass sie die Plattform (12) und die Trennwand (13) vorübergehend bis zu einer Position über dem lichthärtbaren Harz (1) anhebt.

5. Die Stereolithografievorrichtung (110) nach Anspruch 2, die ferner Folgendes aufweist:
eine Zufuhr- und Abfuhrvorrichtung (50), die so konfiguriert ist, dass sie Gas in den luftdichten Raum (3) zuführt oder aus diesem abführt; und
eine Zufuhr- und Abfuhrsteuereinheit (133), die so konfiguriert ist, dass sie eine flüssige Oberfläche der lichthärtbaren Harzschicht durch Betätigen der Zufuhr- und Abfuhrvorrichtung (50) mit einer Unterseite (2A) des Modellierungsobjekts (2) in Kontakt bringt.

6. Die Stereolithografievorrichtung (110) nach Anspruch 5, wobei die Anhebe- und Absenksteuereinheit (31), die Zufuhr- und Abfuhrsteuereinheit (133) und die Bestrahlungssteuereinheit (32) so konfiguriert sind, dass sie wiederholt Bildung der lichthärtbaren Harzschicht, einen Kontakt zwischen der Flüssigkeitsoberfläche der lichthärtbaren Harzschicht und der Unterseite (2A) des Modellierungsobjekts (2) und Bildung der ausgehärteten Schicht durchführen.

7. Die Stereolithografievorrichtung (210) nach Anspruch 1, wobei die Plattform (12) die zylinderförmige Trennwand (213), die um das Modellierungsobjekt (2) herum gebildet wird, zusammen mit dem Modellierungsobjekt (2) durch Bestrahlen mit dem Licht (L) hält.

8. Die Stereolithografievorrichtung (210) nach Anspruch 7, wobei eine Unterseite (2A) des Modellierungsobjekts (2) und eine Unterseite der Trennwand (213) stets bündig sind.

9. Die Stereolithografievorrichtung (310) nach Anspruch 7 oder 8, die ferner Folgendes aufweist:
einen Saugmechanismus (60), der so konfiguriert ist, dass er unausgehärtetes lichthärtbares Harz, das in dem an dem Modellierungsobjekt (2) haftenden lichtgehärteten Harz (1) enthalten ist, ansaugt und entfernt; und
eine Saugsteuereinheit (333), die so konfiguriert ist, dass sie den Saugmechanismus (60) betätigt, indem sie den Saugmechanismus (60) unterhalb der Plattform (12) anordnet, wenn die Plattform (12) über dem lichthärtbaren Harz (1) angeordnet ist.

10. Die Stereolithografievorrichtung (310) nach Anspruch 9, wobei die Anhebe- und Absenksteuereinheit (231), die Bestrahlungssteuereinheit (232) und die Saugsteuereinheit (333) so konfiguriert sind, dass sie wiederholt Bildung der lichthärtbaren Harzschicht, Bildung der ausgehärteten Schicht, Absaugen des unausgehärteten lichthärtbaren Harzes durchführen und das Modellobjekt (2) und die Trennwand (313) durch Laminieren der mehreren ausgehärteten Schichten auf der Plattform (12) formen.

11. Ein Verfahren zur Herstellung eines Zielmodellierungsobjekts unter Verwendung einer Stereolithografievorrichtung (10), die Folgendes aufweist:
einen Modelliertank (11), der ein lichthärtbares Harz (1) enthält und in dem ein lichtdurchlässiger Abschnitt (14) an einer Bodenfläche des Modelliertanks (11) vorgesehen ist,
eine Lichtbestrahlungseinheit (20), die Licht (L) zum Aushärten des lichthärtbaren Harzes (1) durch den lichtdurchlässigen Abschnitt (14) hindurch bestrahlt,
eine Plattform (12), die gegenüber dem lichtdurchlässigen Abschnitt (14) angeordnet ist und so vorgesehen ist, dass sie in Bezug auf den Modellierbehälter (11) angehoben und abgesenkt werden kann, und
eine Trennwand (13), die ein Anheben und Absenken der Plattform (12) ermöglicht, die eine zylindrische Form aufweist, die an einer Außenseite der Plattform (12) mittels eines luftdichten Elements angeordnet ist und die in Zusammenarbeit mit der Plattform (12) einen luftdichten Raum (3) bildet;
wobei das Verfahren zur Herstellung des Zielmodellierungsobjekts (2) Folgendes aufweist:
einen Schritt zum Ausbilden einer lichthärtbaren Harzschicht mit einer vorbestimmten Dicke zwischen dem lichtdurchlässigen Abschnitt und sowohl einer Unterseite der Trennwand (13) als auch einer Unterseite des luftdichten Raums (3), indem die Plattform (12) und die Trennwand (13) angehoben und abgesenkt werden;
einen Schritt zum Ausbilden einer ausgehärteten Schicht durch Bestrahlen der lichthärtbaren Harzschicht von der Lichtbestrahlungseinheit (20) mit dem Licht (L), das einer Querschnittsform des Zielmodellierungsobjekts (2) in einer vorbestimmten Höhenposition entspricht; und
einen Schritt zum relativen Absenken der Trennwand (13) um einen Betrag, der der vorbestimmten Dicke in Bezug auf die Plattform (12) entspricht.

## Revendications

1. Appareil de stéréolithographie (10) comprenant :
un réservoir de modelage (11) qui retient une résine photodurcissable (1), et dans lequel une partie de transmission de lumière (14) est prévue sur une surface inférieure du réservoir de modelage (11) ;
une unité d'irradiation de lumière (20) qui irradie de la lumière (L) pour durcir la résine photodurcissable (1) à travers la partie de transmission de lumière (14) ;
une plate-forme (12) qui est disposée à l'opposé de la partie de transmission de lumière (14) et qui est prévue de manière à pouvoir être levée et abaissée par rapport au réservoir de modelage (11) ;
une cloison (13) formée selon une forme cylindrique et formant un espace étanche à l'air en coopération avec la plate-forme (12) ;
une unité de commande de levage et d'abaissement (31) configurée pour commander une position en hauteur de chacune de la plate-forme et de la cloison (13), et configurée pour former une couche de résine photodurcissable ayant une épaisseur prédéterminée entre la partie de transmission de lumière (14) et à la fois une surface inférieure de la cloison (13) et une surface inférieure de l'espace étanche à l'air (3) ; et
une unité de commande d'irradiation (32) configurée pour former une couche durcie en amenant l'unité d'irradiation de lumière à irradier la couche de résine photodurcissable avec la lumière (L) correspondant à une forme en coupe transversale d'un objet de modelage cible (2) à une position en hauteur prédéterminée.

2. Appareil de stéréolithographie (10) selon la revendication 1, dans lequel la cloison (13) permet à la plate-forme (12) d'être levée et abaissée, et est disposée sur un côté extérieur de la plate-forme (12) au moyen d'un élément étanche à l'air (17).

3. Appareil de stéréolithographie (10) selon la revendication 1 ou 2, dans lequel l'unité de commande de levage et d'abaissement (31) est configurée pour commander la position en hauteur de sorte que la cloison (13) soit relativement abaissée d'une quantité correspondant à l'épaisseur prédéterminée par rapport à la plate-forme (12) chaque fois que la formation de la couche durcie a été achevée.

4. Appareil de stéréolithographie (10) selon la revendication 3, dans lequel l'unité de commande de levage et d'abaissement (31) est configurée pour commander la position en hauteur de sorte qu'elle lève temporairement la plate-forme (12) et la cloison (13) jusqu'à une position au-dessus de la résine photodurcissable (1).

5. Appareil de stéréolithographie (110) selon la revendication 2, comprenant en outre :
une unité d'alimentation et de décharge (50) configurée pour alimenter ou décharger du gaz vers ou depuis l'espace étanche à l'air (3) ; et
une unité de commande d'alimentation et de décharge (133) configurée pour amener une surface liquide de la couche de résine photodurcissable en contact avec une surface inférieure (2A) de l'objet de modelage (2) en actionnant l'unité d'alimentation et de décharge (50).

6. Appareil de stéréolithographie (110) selon la revendication 5, dans lequel l'unité de commande de levage et d'abaissement (31), l'unité de commande d'alimentation et de décharge (133), et l'unité de commande d'irradiation (32) sont configurées pour effectuer de manière répétée la formation de la couche de résine photodurcissable, le contact entre la surface liquide de la couche de résine photodurcissable et la surface inférieure (2A) de l'objet de modelage (2), et la formation de la couche durcie.

7. Appareil de stéréolithographie (210) selon la revendication 1, dans lequel la plate-forme (12) maintient la cloison de forme cylindrique (213) qui est formée autour de l'objet de modelage (2) conjointement avec l'objet de modelage (2) en irradiant la lumière (L).

8. Appareil de stéréolithographie (210) selon la revendication 7, dans lequel une surface inférieure (2A) de l'objet de modelage (2) et une surface inférieure de la cloison (213) sont toujours dans un état de rinçage.

9. Appareil de stéréolithographie (310) selon la revendication 7 ou 8, comprenant en outre :
un mécanisme d'aspiration (60) configuré pour aspirer et retirer une résine photodurcissable non durcie incluse dans la résine photodurcissable (1) collée à l'objet de modelage (2) ; et
une unité de commande d'aspiration (333) configurée pour actionner le mécanisme d'aspiration (60) en disposant le mécanisme d'aspiration (60) sous la plate-forme (12) lorsque la plate-forme (12) est disposée au-dessus de la résine photodurcissable (1).

10. Appareil de stéréolithographie (310) selon la revendication 9, dans lequel l'unité de commande de levage et d'abaissement (231), l'unité de commande d'irradiation (232), et l'unité de commande d'aspiration (333) sont configurées pour effectuer de manière répétée la formation de la couche de résine photodurcissable, la formation de la couche durcie, l'aspiration de la résine photodurcissable non durcie, et pour former l'objet de modelage (2) et la cloison (313) en stratifiant la pluralité de couches durcies sur la plate-forme (12).

11. Procédé de fabrication d'un objet de modelage cible effectué en utilisant un appareil de stéréolithographie (10) qui inclut :
un réservoir de modelage (11) qui retient une résine photodurcissable (1), et dans lequel une partie de transmission de lumière (14) est prévue sur une surface inférieure du réservoir de modelage (11),
une unité d'irradiation de lumière (20) qui irradie de la lumière (L) pour durcir la résine photodurcissable (1) à travers la partie de transmission de lumière (14),
une plate-forme (12) qui est disposée à l'opposé de la partie de transmission de lumière (14) et qui est prévue de manière à pouvoir être levée et abaissée par rapport au réservoir de modelage (11), et
une cloison (13) permettant à la plate-forme (12) d'être levée et abaissée, étant formée selon une forme cylindrique, étant disposée sur un côté extérieur de la plate-forme (12) au moyen d'un élément étanche à l'air, et formant un espace étanche à l'air (3) en coopération avec la plate-forme (12) ;
le procédé de fabrication de l'objet de modelage cible (2) comprenant :
une étape pour former une couche de résine photodurcissable ayant une épaisseur prédéterminée entre la partie de transmission de lumière et à la fois une surface inférieure de la cloison (13) et une surface inférieure de l'espace étanche à l'air (3) en levant et en abaissant chacune de la plate-forme (12) et de la cloison (13) ;
une étape pour former une couche durcie en irradiant la couche de résine photodurcissable provenant de l'unité d'irradiation de lumière (20) avec la lumière (L) correspondant à une forme en coupe transversale de l'objet de modelage cible (2) à une position en hauteur prédéterminée ; et
une étape pour abaisser relativement la cloison (13) d'une quantité correspondant à l'épaisseur prédéterminée par rapport à la plate-forme (12).
